# EUROPÄISCHE PATENTSCHRIFT

(11) **EP 3 149 758 B1**
(45) Veröffentlichungstag und Bekanntmachung des Hinweises auf die Patenterteilung: **28.02.2018**
(21) Anmeldenummer: 15736830.9
(22) Anmeldetag: 10.07.2015
(51) Int. Cl.: H01H 50/54, H01H 3/32, H01H 71/46

(54) **SCHALTGERÄT MIT MODULAREM HILFSSCHALTERBLOCK**
SWITCHING DEVICE WITH MODULAR AUXILIARY SWITCHING UNIT
DISPOSITIF DE COMMUTATION À BLOC DE COMMUTATION AUXILIAIRE MODULAIRE

(30) Priorität: 09.09.2014 DE 102014218013
(43) Veröffentlichungstag der Anmeldung: 05.04.2017
(73) Patentinhaber: Siemens Aktiengesellschaft, 80333 München (DE)
(72) Erfinder: FISCHER, Daniela, 92224 Amberg (DE); GRAF, Josef, 92256 Hahnbach (DE); OBERLEITER, Alexander, 91230 Thalheim (DE); ZIMMERMANN, Norbert, 92237 Sulzbach-Rosenberg (DE)
(86) Internationale Anmeldenummer: PCT/EP2015/065783
(87) Internationale Veröffentlichungsnummer: WO 2016/037731

(56) Entgegenhaltungen:
- EP-A2- 0 905 732
- WO-A1-92/06483
- DE-C1- 10 009 499
- DE-U1-202005 015 448

## Beschreibung

Die Erfindung betrifft ein Schaltgerät mit einem Grundmodul, in welchem ein elektromagnetischer Antrieb, welcher ein Joch, eine Spule und einen beweglich zum Joch angeordneten Anker umfasst, sowie ein Schaltkontakt angeordnet ist, welcher ein fest positioniertes und ein gegenüberliegend dazu angeordnetes bewegliches Schaltstück umfasst, wobei durch eine Bewegung des Ankers zwischen einer Position "offen" und einer Position "geschlossen" geschaltet werden kann, und mit einem modularen Hilfsschalterblock, in welchem ein Kontaktsystem aus einem fest positionierten und einem gegenüberliegend dazu angeordneten beweglichen Schaltstück angeordnet ist.

Schaltgeräte, insbesondere elektromagnetische Schaltgeräte, werden beispielsweise in der Antriebs- und Automatisierungstechnik eingesetzt und dienen im Verbund mit anderen Komponenten zur Sicherung und Steuerung elektrischer Verbraucher. Schaltgeräte sind beispielsweise Relais oder Schütze. Relais sind elektromagnetische oder elektromechanische Schalter. Sie werden zum Ein-, Aus- oder Umschalten von Stromkreisen verwendet.

Ein Schütz ist ein elektromagnetisch betätigter Schalter. Hier fließt ein Steuerstrom durch eine Magnetspule, wobei durch die magnetische Anziehung mechanisch ein Kontakt betätigt wird, der den Hauptstromkreis schließt. Schütze wurden unter Anderem entwickelt, um über einen handbetätigten Tastschalter mit kleiner Schaltleistung einen Verbraucher mit großer Leistungsaufnahme, beispielsweise einen Motor, einzuschalten. Im Wesentlichen handelt es sich bei einem Schütz auch um ein Relais, jedoch mit wesentlich höherer Schaltleistung.

Beim Abschalten einer Magnetspule eines derartigen Schaltgeräts beziehungsweise einer Schützspule eines Schützes, entstehen kurzfristig Spannungsspitzen, die an ein verbundenes Netz weitergegeben werden. Dadurch können Schäden an anderen elektrischen Geräten im Netz entstehen. Um dies zu vermeiden, werden Überspannungsbegrenzer eingesetzt.
Schaltgeräte, insbesondere Schütze, gibt es für verschiedene Einsatzfälle in der Industrie in unterschiedlichen Schaltgerätausführungen. Diese Schaltgeräteausführungen werden dabei auch mit unterschiedlichen Anschlussmöglichkeiten - also Schraubanschluss, Federzugtechnik oder Ringkabelschuhanschluss - benötigt. Bisher wurden diese Schaltgeräteausführungen mit eigens dafür hergestellten Geräten gefertigt. Grundbestandteil der Geräte, wie Schaltkammern oder Kontaktträger, mussten dabei aber trotz einer unter Umständen relativ geringen Fertigungsstückzahl nochmals als aufwändiges Komplettwerkzeug angefertigt werden. Dies führt zu erhöhten Herstellungskosten der Geräte, welche auf Grund sehr komplizierter Werkzeuge im laufenden Fertigungsprozess auch anfällig gegen Ausfall und Maßabweichungen sind.
Der grundsätzliche Aufbau dieser Schaltgeräte sieht ein Grundmodul vor, in welchem ein elektromagnetischer Antrieb, welcher ein Joch, eine Spule und ein beweglich zum Joch angeordneten Anker umfasst, sowie ein Schaltkontakt angeordnet ist, welcher ein fest positioniertes und ein gegenüberliegend dazu angeordnetes bewegliches Schaltstück umfasst, wobei durch eine Bewegung des Ankers zwischen einer Position "offen" und einer Position "geschlossen" geschaltet werden kann. Auf dem Grundmodul ist ein Hilfsschalterblock angeordnet, in welchem ein Kontaktsystem aus einem fest positionierten und einem gegenüberliegend dazu angeordneten beweglichen Schaltstück angeordnet ist. Das Problem besteht nun darin, dass die Grundmodule unterschiedliche Magnetwege aufweisen, so dass bei mechanischer Kopplung ein Hilfsschalterblock nicht für alle Baugrößen eines Grundmoduls zu verwenden ist. EP-A-0905732 offenbart ein Schaltgerät nach dem Oberbegriff des Anspruchs 1.

Demgemäß besteht die Aufgabe der vorliegenden Erfindung darin, ein Schaltgerät zu schaffen, das auf möglichst einfache Art und Weise in unterschiedliche Geräteausführungen modifiziert werden kann.

Diese Aufgabe wird erfindungsgemäß durch ein Schaltgerät mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch ein Schaltgerät gelöst mit einem Grundmodul, in welchem ein elektromagnetischer Antrieb, welcher ein Joch, eine Spule und einen beweglich zum Joch angeordneten Anker umfasst, sowie ein Schaltkontakt angeordnet ist, welcher ein fest positioniertes und ein gegenüberliegend dazu angeordnetes bewegliches Schaltstück umfasst, wobei durch eine Bewegung des Ankers zwischen einer Position "offen" und einer Position "geschlossen" geschaltet werden kann, und mit einem modularen Hilfsschalterblock, in welchem ein Kontaktsystem aus einem fest positionierten und einem gegenüberliegend dazu angeordneten beweglichen Schaltstück angeordnet ist. Die Erfindung zeichnet sich dabei dadurch aus, dass die Kopplung zwischen Grundmodul und modularem Hilfsschalterblock derart ausgebildet ist, dass unabhängig vom verwendeten Hilfsschalterblock im Auslösefall unterschiedliche Wegstrecken im Kontaktsystem des Hilfsschalterblocks mittels eines elastischen Elements übertragbar sind.

Dazu ist im Kontaktträger des Hilfsschalterblocks ein elastisches Element, vorzugsweise in Form einer Druckfeder, angeordnet, die zur Nachführung des Hilfsschalters dient und auf den beweglichen Kontaktträger im Hilfsschalter wirkt. Das elastische Element wirkt dabei mit einer Kraft F2 nach unten in Richtung des Grundmoduls. Im Hilfsschalterblock wird ein Weg S2 zurückgelegt, der im Grundmodul zu einer Wegübertragung S1 führt. Da S1 größer ist als S2 ergibt sich eine Differenz X. Der Kraft F2 wirkt die Kraft F1 entgegen. Die Kraft F1 ist die Kraft der Rückdruckfeder im Schütz bzw. im Grundmodul. Die Kraft F1 ist größer als F2.

Der Kern der Erfindung besteht darin, eine Kopplung zwischen Grundmodul und modularem Hilfsschalterblock zu konzipieren, die unabhängig vom gewählten Grundmodul beziehungsweise vom modularen Hilfsschalterblock funktioniert, das heißt, es können Grundmodule unterschiedlicher Baugröße mit verschiedenen modularen Hilfsschalterblöcken kombiniert werden. Der modulare Hilfsschalterblock ist dabei nicht mechanisch beziehungsweise formschlüssig mit dem Kontaktträger des Grundmoduls verbunden. Es liegt somit eine Entkopplung des Magnetwegs des Grundmoduls vom Weg des internen Hilfsschalterblocks vor, so dass auch externe Hilfsschalterblöcke der kleineren Baureihen verwendet werden können. Der Magnetweg des Grundmoduls spielt somit eine nebensächliche Rolle bei der Auslegung der externen Hilfsschalter. Die externen Hilfsschalterblöcke können somit auf jede Baugröße bautiefenoptimiert ausgelegt werden. Dies spart Bautiefe und schafft somit einen erheblichen Vorteil gegenüber dem Wettbewerb.

Der modulare Hilfsschalterblock wird mechanisch auf die Frontpartie der Schaltkammer des Grundmoduls aufgesetzt. Somit liegt die Anschlussebene des Spulenanschlusses vor den Hauptstrombahnen. Der bewegliche Kontaktträger im internen Hilfsschalterblock ist nicht mechanisch beziehungsweise formschlüssig mit dem Kontaktträger im Grundmodul verbunden. Dies ermöglicht die Verwendung von modularen Hilfsschalterblöcken über mehrere Baugrößen hinweg. Die Rückstellfedern gewährleisten im abgekoppelten Zustand das sichere Kontaktieren der Hilfskontakte. Der Hilfsschalterblock mit integriertem Spulenanschluss kann bündig zur Gerätekontur, mittig oder in beliebigem Abstand zur Geräteaußenkante entsprechend der Aufnahmekontur am Grundmodul angebracht werden. Durch den modularen Aufbau kann unabhängig vom Grundmodul die Anschlusstechnik gewählt werden. Die Bedämpfung kann nachträglich vom Kunden innerhalb der Gerätekontur direkt am Spulenanschluss angebracht werden.

Um die Spulenanschlussleitung bequem verlegen zu können, ist im modularen Hilfsschalterblock mit integriertem Spulenanschluss zwischen den Hilfskontakten und dem Spulenanschluss ein Kabelkanal integriert. Es sind auch Ausführungsbeispiele denkbar, die nicht nur eine werksseitige Montage beziehungsweise Demontage des modularen Hilfsschalterblocks mit integriertem Spulenanschluss zulassen, sondern auch vom Kunden nach der Auslieferung. Der modulare Hilfsschalterblock kann beliebig mit Hilfsöffnern und/oder Hilfsschließern bestückt werden.

In einer besonders vorteilhaften Ausgestaltung der Erfindung kann es vorgesehen sein, dass das elastische Element eine Druckfeder ist. Die Druckfeder wirkt mit einer Kraft F2 vertikal nach unten in Richtung des Grundmoduls. Ihr wirkt die Kraft F1 der Rückdruckfedern im Grundmodul vertikal nach oben in Richtung des Hilfsschalterblocks entgegen.

In einer speziellen Ausgestaltung der Erfindung kann ein weiteres Konzept darin bestehen, dass am modularen Hilfsschalterblock ein Spulenanschluss integriert ist, der vor den Hauptstrombahnen positioniert ist. Der modulare Hilfsschalterblock wird mechanisch auf die Grundpartie der Schaltkammer des Grundmoduls aufgesetzt, so dass die Anschlussebene des Spulanschlusses vor den Hauptstrombahnen liegt.

In einer weiteren speziellen Fortführung dieses erfindungsgemäßen Konzepts kann es vorgesehen sein, dass der modulare Hilfsschalterblock als Standardhilfsmodul oder Kommunikationshilfsmodul oder Kondensatorschützhilfsmodul ausgebildet ist. Diese Gerätevarianz ist durch den variablen Aufbau des erfindungsgemäßen Schaltgeräts möglich. Durch den Austausch einzelner Grundgerätekomponenten können die verschiedenen Hilfsmodule konzipiert werden. Zu den austauschbaren Gerätekomponenten gehören die Anschlusstechnik, der Überspannungsbegrenzer und die Gehäuseabdeckung.

Eine erfindungsgemäße Weiterführung dieses Konzepts kann darin bestehen, dass der modulare Hilfsschalterblock mit einer Schraubanschlusstechnik oder mit einer Federzuganschlusstechnik oder mit einer Ringkabelschuhanschlusstechnik ausgebildet ist. Durch diese drei unterschiedlichen Anschlusstechniken wird eine große Gerätevarianz ermöglicht, wobei die Varianz des Grundmoduls nicht erhöht wird. Der modulare Hilfsschalterblock ist mechanisch am Gehäuse der Schaltkammer des Grundmoduls gekoppelt. Der Block ist auch wieder demontierbar, so dass durch einfaches Austauschen entweder werksseitig oder kundenseitig die Anschlusstechnik für das Grundgerät geändert werden kann. Insbesondere bei Schaltgeräten größerer Baugrößen muss besonders wegen der Werkzeugkosten auf eine Verringerung der Teilevarianz des Grundgerätes geachtet werden.

In einer weiteren speziellen Fortführung dieses erfindungsgemäßen Konzepts kann es vorgesehen sein, dass das Grundkonzept des Schaltgeräts aus Grundmodul und modularem Hilfsschalterblock mit Grundmodulen unterschiedlicher Baugröße beziehungsweise mit modularen Hilfsschalterblöcken unterschiedlicher Funktionen umsetzbar ist. Der modulare Hilfsschalterblock ist nicht mechanisch beziehungsweise formschlüssig mit dem Kontaktträger des Grundmoduls verbunden. Durch diese Entkopplung der Module voneinander ist ein einfacher Austausch möglich.

In einer besonders bevorzugten Ausgestaltung der Erfindung kann eine technische Weiterführung dieses erfindungsgemäßen Konzepts darin bestehen, dass die Bedämpfung nachträglich direkt am Spulenanschluss anzubringen ist. Diese Bedämpfung kann nachträglich vom Kunden an der Gerätekontur direkt am Spulenanschluss angebracht werden. Das Handling wird dabei dadurch vereinfacht, dass die Bedämpfung über mehrere Baugruppen hinweg immer an der gleichen Stelle positioniert wird. Die technische Umsetzung sieht dabei vor, dass am Hilfsschalterblock eine über dem Filmscharnier gelagerte Klappe geöffnet werden kann und im darunter liegenden Schacht eine Bedämpfung beispielsweise in Form einer Diode, eines Varistors oder eines RC-Gliedes in Parallelschaltung zur Spule eingeführt wird. Die kundenseitige Akzeptanz wird somit erhöht, da der Kunde keinen zusätzlichen Platz für mögliche Anbauteile, im Speziellen die Bedämpfung bei der Auslegung berücksichtigen muss.

In einer weiteren besonders bevorzugten Ausgestaltung der Erfindung kann eine technische Weiterführung des erfindungsgemäßen Konzepts darin bestehen, dass zwischen Spulenanschluss und Hilfskontakten ein Kabelkanal angeordnet ist. Der Kabelkanal ist ebenso wie die Bedämpfung innerhalb der Gerätekontur identisch über alle Baugrößen hinweg konzipiert. Gleiches Handling über mehrere Baugrößen erhöht die Kundenakzeptanz, da der Kunde keine zusätzlichen Plätze für mögliche Anbauteile berücksichtigen muss.

Eine erfindungsgemäße Weiterführung dieses Konzepts kann darin bestehen, dass der modulare Hilfsschalterblock mit Hilfsöffner und/oder Hilfsschließern zu bestücken ist. Auch in diesem Punkt besteht keine konkrete Festlegung, so dass auch hier eine Varianz möglich ist.

Erfindungsgemäß kann es außerdem vorgesehen sein, dass das Schaltgerät ein Schütz ist.

Das erfindungsgemäße Schaltgerät ist vorzugsweise zweiteilig ausgebildet und weist ein Grundmodul auf, welches vorzugsweise quaderförmig konzipiert ist mit einer Oberseite, einer Unterseite und vier Seitenteilen. An einem Seitenteil ist ein Anschlussbereich für elektrische Leiter angeordnet.

Abtrennbar vom Grundmodul ist vorzugsweise auf der Oberseite ein separater modularer Hilfsschalterblock angeordnet. Der Hilfsschalterblock kann als Standardhilfsmodul, als Kommunikationshilfsmodul oder als Kondensatorschützhilfsmodul ausgebildet sein. Der Hilfsschalterblock ist vorzugsweise quaderförmig ausgebildet mit einer Oberseite, einer Unterseite und vier Seitenteilen. Der modulare Hilfsschalterblock kann mechanisch auf das Gehäuse des Grundmoduls aufgesetzt werden, vorzugsweise in einer Ausnehmung des Grundmoduls.

Der modulare Hilfsschalterblock weist an seiner Oberseite externe Koppelstellen für Zubehör, einen Kabelkanal sowie einen Spulenanschluss auf. Im Grundmodul ist ein elektromagnetischer Antrieb angeordnet, der eine Spule, ein Joch und einen beweglich zum Joch angeordneten Anker umfasst. Zudem ist im Grundmodul ein Schaltkontakt angeordnet, welcher ein fest positioniertes und ein gegenüberliegend dazu angeordnetes bewegliches Schaltstück umfasst, wobei durch die Bewegung des Ankers zwischen einer Position "offen" und einer Position "geschlossen" geschaltet werden kann. Ebenso ist im modularen Hilfsschalterblock ein Kontaktsystem aus einem fest positionierten und einem gegenüberliegend dazu angeordneten beweglichen Schaltstück angeordnet.

Neben dem Anker sind Rückdruckfedern im Grundmodul angeordnet, die mit einer Kraft F1 vertikal nach oben in Richtung des Hilfsschalterblocks wirken. Oberhalb des elektromagnetischen Antriebs des Schütz ist ein Kontaktträger angeordnet. Ebenso ist im Hilfsschalterblock ein Kontaktträger angeordnet. Im Kontaktträger des Hilfsschalterblocks ist ein elastisches Element, vorzugsweise eine Druckfeder, positioniert. Das elastische Element wirkt mit einer Kraft F2 vertikal nach unten in Richtung des elektromagnetischen Antriebs des Grundmoduls. Dabei ist die Kraft F1 der Rückdruckfeder größer als die Kraft F2.

Zudem ist an der Oberseite des Hilfsschalterblocks eine Klappe positioniert, die über einem Filmscharnier gelagert ist. Die Klappe kann geöffnet werden, um im darunter liegenden Schacht eine Bedämpfung beispielsweise in Form einer Diode oder eines Varistors oder eines RC-Gliedes in Parallelschaltung zur Spule einzufügen.

Die vorliegende Erfindung zeichnet sich durch einen variablen Geräteaufbau aus, der sich aus der Verwendung eines Grundmoduls und eines modularen Hilfsschalterblocks ergibt. Durch entsprechende Gestaltung des modularen Hilfsschalterblocks können durch Austausch oder Gerätemontage in einem Fertigungsprozess unterschiedliche Schaltgeräteausführungen auf einfache Art und Weise erzeugt werden. Dies führt in vorteilhafter Weise zu einer Reduzierung der Teilevarianz auf Grund einer modularen Verwendung einzelner Bauteile beziehungsweise einzelner Baugruppen. Damit verbunden ist eine Kostenreduzierung im Geräteaufbau durch die Automatisierung und insbesondere bei der Produktion geringer Schaltgerätestückzahlen.

Weitere Vorteile und Ausführungen der Erfindung werden nachfolgend anhand eines Ausführungsbeispiels sowie anhand der Zeichnung erläutert.

Dabei zeigen schematisch:
Fig. 1 in einer perspektivischen Darstellung ein erfindungsgemäßes Schaltgerät mit einem Grundmodul und einem modularen Hilfsschalterblock;
Fig. 2 in einer perspektivischen Darstellung ein zweites Ausführungsbeispiel für ein erfindungsgemäßes Schaltgerät mit einem Grundmodul und einem weiteren modularen Hilfsschalterblock;
Fig. 3 in einer perspektivischen Darstellung ein erfindungsgemäßes Schaltgerät mit einem elektromagnetischen Antrieb in geöffneter Position;
Fig. 4 in einer perspektivischen Darstellung ein erfindungsgemäßes Schaltgerät mit einem elektromagnetischen Antrieb in geschlossener Position.

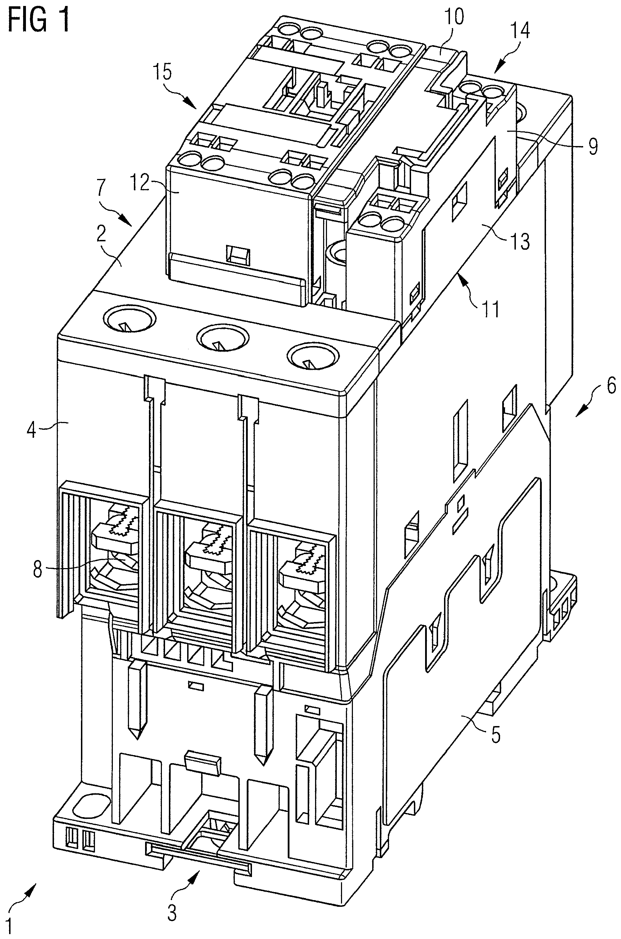

In Fig. 1 ist ein erfindungsgemäßes Schaltgerät, insbesondere ein Schütz, dargestellt. Das erfindungsgemäße Schaltgerät ist zweiteilig ausgebildet und weist ein Grundmodul 1 auf, welches vorzugsweise quaderförmig konzipiert ist mit einer Oberseite 2, einer Unterseite 3 und vier Seitenteil 4, 5, 6, 7. Vorzugsweise am Seitenteil 4 ist ein Anschlussbereich 8 für elektrische Leiter angeordnet. Abtrennbar vom Grundmodul 1 ist vorzugsweise auf der Oberseite ein separater modularer Hilfsschalterblock 9 angeordnet. Der modulare Hilfsschalterblock 9 kann als Standardhilfsmodul, als Kommunikationshilfsmodul oder als Kondensatorschützhilfsmodul ausgebildet sein. Der modulare Hilfsschalterblock 9 ist vorzugsweise quaderförmig ausgebildet mit einer Oberseite 10, einer Unterseite 11 und vier Seitenteilen 12, 13, 14, 15. Der modulare Hilfsschalterblock 9 kann auf das Grundmodul 1 aufgesetzt werden, vorzugsweise in einer Ausnehmung des Grundmoduls 1. Vorzugsweise an der Oberseite 10 des modularen Hilfsschalterblocks 9 ist eine externe Koppelstelle 16 für Zubehör, ein Kabelkanal 17 sowie ein Spulenanschluss 18 angeordnet.

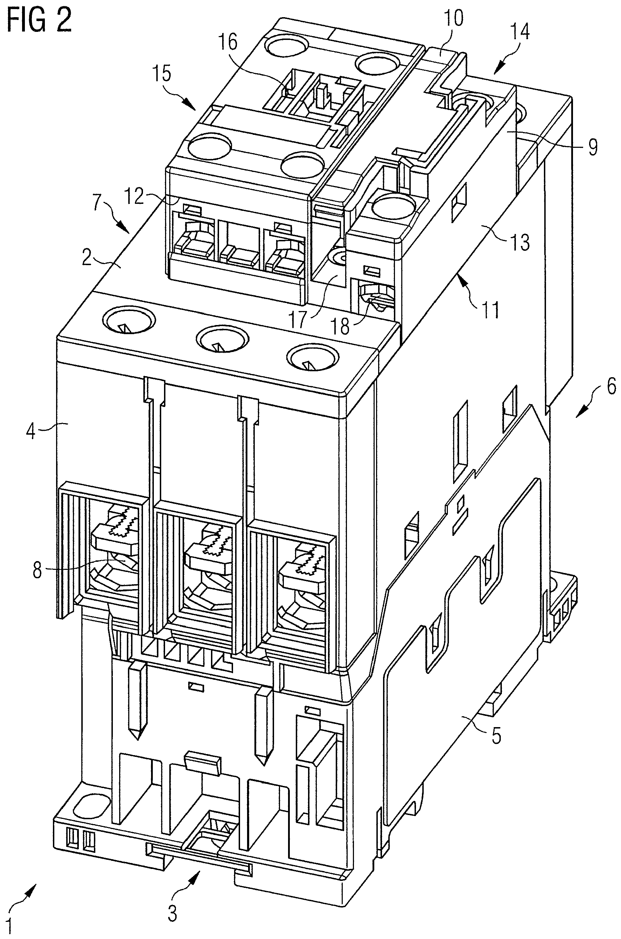

Fig. 2 zeigt ein zweites Ausführungsbeispiel eines erfindungsgemäßen Schaltgeräts mit einem Grundmodul 1 und einem weiteren Ausführungsbeispiel für einen modularen Hilfsschalterblock 9.

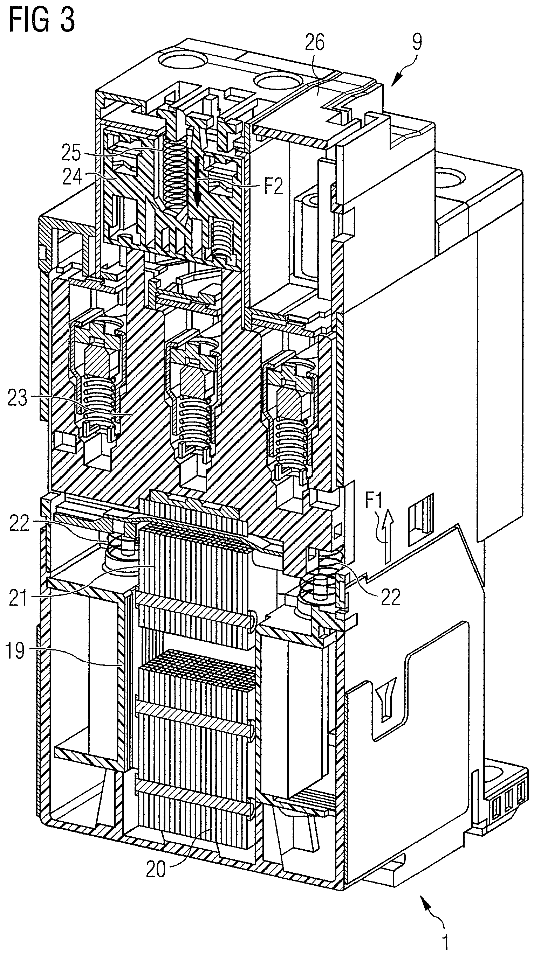

Aus Fig. 3 geht hervor, dass im Grundmodul 1 ein magnetischer Antrieb aus einer Spule 19, einem Joch 20 und einem beweglich zum Joch 20 angeordneten Anker 21 angeordnet ist. Zudem befindet sich im Grundmodul 1 ein Schaltkontakt, welcher ein fest positioniertes und ein gegenüberliegend dazu angeordnetes bewegliches Schaltstück umfasst, wobei durch eine Bewegung des Ankers 21 zwischen einer Position "offen" und einer Position "geschlossen" geschaltet werden kann. Fig. 3 zeigt die geöffnete Position des elektromagnetischen Antriebs.

Neben dem Anker 21 sind Rückdruckfedern 22 im Grundmodul 1 angeordnet, die mit einer Kraft F1 vertikal nach oben in Richtung des Hilfsschalterblocks 9 wirken. Oberhalb des elektromagnetischen Antriebs des Schütz ist ein Kontaktträger 23 angeordnet. Ebenso ist im Hilfsschalterblock 9 ein Kontaktträger 24 angeordnet, der formschlüssig zum Kontaktträger 23 des Grundmoduls 1 ausgebildet ist. Im Kontaktträger 24 des Hilfsschalterblocks 9 ist ein elastisches Element 25, vorzugsweise eine Druckfeder, positioniert. Das elastische Element 25 wirkt mit einer Kraft F2 vertikal nach unten in Richtung des elektromagnetischen Antriebs des Grundmoduls 1. Dabei ist die Kraft F1 der Rückdruckfeder größer als die Kraft F2.

Zudem ist an der Oberseite 10 des Hilfsschalterblocks 9 eine Klappe 26 positioniert, die über einem Filmscharnier gelagert ist. Die Klappe 26 kann geöffnet werden, um im darunter liegenden Schacht eine Bedämpfung beispielsweise in Form einer Diode oder eines Varistors oder eines RC-Gliedes in Parallelschaltung zur Spule einzufügen.

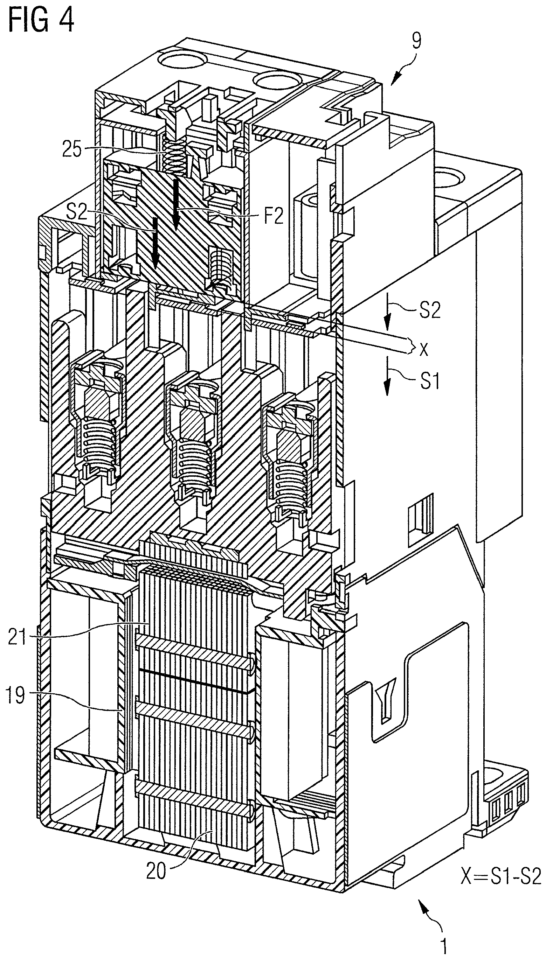

Fig. 4 zeigt den elektromagnetischen Antrieb des erfindungsgemäßen Schaltgeräts in geschlossener Position. Das elastische Element 25 wirkt hier mit einer Kraft F2 nach unten in Richtung des Grundmoduls 1. Im Hilfsschalterblock wird ein Weg S2 zurückgelegt, der im Grundmodul 1 zu einer Wegübertragung S1 führt. Da S1 größer ist als S2 ergibt sich eine Differenz X, die durch das elastische Element 25 überbrückt wird.

Die vorliegende Erfindung zeichnet sich durch einen variablen Geräteaufbau aus, der sich aus der Verwendung eines Grundmoduls und eines modularen Hilfsschalterblocks ergibt. Durch entsprechende Gestaltung des modularen Hilfsschalterblocks können durch Austausch oder Gerätemontage in einem Fertigungsprozess unterschiedliche Schaltgeräteausführungen auf einfache Art und Weise erzeugt werden. Dies führt in vorteilhafter Weise zu einer Reduzierung der Teilevarianz auf Grund einer modularen Verwendung einzelner Bauteile beziehungsweise einzelner Baugruppen. Damit verbunden ist eine Kostenreduzierung im Geräteaufbau durch die Automatisierung und insbesondere bei der Produktion geringer Schaltgerätestückzahlen.

### Bezugszeichenliste

- 1: Grundmodul
- 2: Oberseite
- 3: Unterseite
- 4: Seitenteil
- 5: Seitenteil
- 6: Seitenteil
- 7: Seitenteil
- 8: Anschlussbereich
- 9: Hilfsschalterblock
- 10: Oberseite
- 11: Unterseite
- 12: Seitenteil
- 13: Seitenteil
- 14: Seitenteil
- 15: Seitenteil
- 16: Koppelstelle
- 17: Kabelkanal
- 18: Spulenanschluss
- 19: Spule
- 20: Joch
- 21: Anker
- 22: Rückdruckfeder
- 23: Kontaktträger
- 24: Kontaktträger
- 25: elastisches Element
- 26: Klappe

## Patentansprüche

1. Schaltgerät aufweisend:
- ein Grundmodul (1), in welchem ein elektromagnetischer Antrieb, welcher ein Joch (20), eine Spule (19) und einen beweglich zum Joch (20) angeordneten Anker (21) umfasst, sowie ein Schaltkontakt angeordnet ist, welcher ein fest positioniertes und ein gegenüberliegend dazu angeordnetes bewegliches Schaltstück umfasst, wobei durch eine Bewegung des Ankers (21) zwischen einer Position "offen" und einer Position "geschlossen" geschaltet werden kann;
- einen modularen Hilfsschalterblock (9), in welchem ein Kontaktsystem aus fest positionierten und einem gegenüberliegend dazu angeordneten beweglichen Schaltstück angeordnet ist,
**dadurch gekennzeichnet, dass** die Kopplung zwischen Grundmodul (1) und modularem Hilfsschalterblock (9) derart ausgebildet ist, dass unabhängig vom verwendeten Hilfsschalterblock (9) im Auslösefall unterschiedliche Wegstrecken im Kontaktsystem des Hilfsschalterblocks (9) mittels eines elastischen Elements übertragbar sind, wobei in geschlossener Position das elastische Element (25) mit einer Kraft F2 nach unten in Richtung Grundmodul (1) wirkt, wobei im Hilfsschalterblock ein Weg S2 zurückgelegt wird, der im Grundmodul (1) zu einer Wegübertragung S1 führt, wobei sich eine Differenz X ergibt, da S1 größer ist als S2, die durch das elastische Element (25) überbrückt wird.

2. Schaltgerät nach Anspruch 1,
**dadurch gekennzeichnet, dass** das elastische Element eine Druckfeder ist.

3. Schaltgerät nach Anspruch 1 oder 2,
**dadurch gekennzeichnet, dass** am modularen Hilfsschalterblock (9) ein Spulenanschluss (18) integriert ist, der vor den Hauptstrombahnen positioniert ist.

4. Schaltgerät nach einem der Ansprüche 1 bis 3,
**dadurch gekennzeichnet, dass** der modulare Hilfsschalterblock (9) als Standardhilfsmodul oder Kommunikationshilfsmodul oder Kondensatorschützhilfsmodul ausgebildet ist.

5. Schaltgerät nach einem der Ansprüche 1 bis 4,**dadurch gekennzeichnet, dass** der modulare Hilfsschalterblock (9) in einer Schraubanschlusstechnik oder mit einer Federzuganschlusstechnik oder mit einer Ringkabelschuhanschlusstechnik ausgebildet ist.

6. Schaltgerät nach einem der Ansprüche 1 bis 5,
**dadurch gekennzeichnet, dass** das Grundkonzept des Schaltgeräts aus Grundmodul (1) und modularem Hilfsschalterblock (9) mit Grundmodulen (1) unterschiedlicher Baugröße beziehungsweise mit modularen Hilfsschalterblöcken (9) unterschiedlicher Funktion umsetzbar ist.

7. Schaltgerät nach einem der Ansprüche 1 bis 6,
**dadurch gekennzeichnet, dass** die Bedämpfung nachträglich direkt am Spulenanschluss (18) anzubringen ist.

8. Schaltgerät nach einem der Ansprüche 1 bis 7,
**dadurch gekennzeichnet, dass** zwischen Spulenanschluss (18) und Hilfskontakten ein Kabelkanal (17) angeordnet ist.

9. Schaltgerät nach einem der Ansprüche 1 bis 8,
**dadurch gekennzeichnet, dass** der modulare Hilfsschalterblock (9) mit Hilfsöffnern und/oder Hilfsschließern zu bestücken ist.

10. Schaltgerät nach einem der Ansprüche 1 bis 9,
**dadurch gekennzeichnet, dass** das Schaltgerät ein Schütz ist.

## Claims

1. Switching device, comprising:
- a base module (1), in which is arranged an electromagnetic drive comprised of a yoke (20), a coil (19) and an armature (21) arranged in a moveable manner relative to the yoke (20), and a switching contact, comprising a stationary switching piece and a moveable switching piece arranged opposite the stationary switching piece, wherein switching between an "open" position and a "closed" position can be achieved by means of a movement of the armature (21);
- a modular auxiliary switching unit (9), in which is arranged a contact system consisting of a stationary switching piece and a moveable switching piece arranged opposite the stationary switching piece,
**characterized in that** the coupling of the base module (1) to the modular auxiliary switching unit (9) is configured such that, in case of tripping, regardless of the auxiliary switching unit (9) used, different paths are transferable to the contact system of the auxiliary switching unit (9) by means of an elastic element, wherein, in the closed position, the elastic element (25) exerts a downward force F2 in the direction of the base module (1), wherein, in the auxiliary switching unit, a path S2 is traversed, thus transferring a path S1 to the base module (1), wherein a difference X results because S1 is greater than S2, which difference is bridged by the elastic element (25).

2. Switching device according to Claim 1,
**characterized in that** the elastic element is a pressure spring.

3. Switching device according to Claim 1 or 2,
**characterized in that** a coil terminal (18) is integrated in the modular auxiliary switching unit (9), arranged ahead of the main current circuits.

4. Switching device according to one of Claims 1 to 3,
**characterized in that** the modular auxiliary switching unit (9) is configured as a standard auxiliary module, an auxiliary communications module, or an auxiliary capacitor switching contactor module.

5. Switching device according to one of Claims 1 to 4,
**characterized in that** the modular auxiliary switching unit (9) is configured with screw terminal technology, spring contact technology or ring cable lug terminal technology.

6. Switching device according to one of Claims 1 to 5,
**characterized in that** the basic design of the switching device comprised of a base module (1) and a modular auxiliary switching unit (9) can be reconfigured with base modules (1) of different dimensions or modular auxiliary switching units (9) with different functions.

7. Switching device according to one of Claims 1 to 6,
**characterized in that** damping elements can be directly retrofitted to the coil terminal (18).

8. Switching device according to one of Claims 1 to 7,
**characterized in that** a cable duct (17) is arranged between the coil terminal (18) and the auxiliary contacts.

9. Switching device according to one of Claims 1 to 8,
**characterized in that** the modular auxiliary switching unit (9) is fitted with auxiliary NC contacts and/or auxiliary NO contacts.

10. Switching device according to one of Claims 1 to 9,
**characterized in that** the switching device is a contactor.

## Revendications

1. Appareil de commutation comportant :
- un module de base (1) dans lequel sont agencés un entraînement électromagnétique comprenant un étrier (20), une bobine (19) et un induit (21) mobile par rapport à l'étrier (20), ainsi qu'un contact de commutation comprenant une pièce de commutation positionnée de manière fixe et une pièce de commutation mobile agencée en vis-à-vis, un mouvement de l'induit (21) permettant de commuter entre une position « ouverte » et une position « fermée ;
- un bloc modulaire de commutateurs auxiliaires (9) dans lequel est agencé un système de contact composé d'une pièce de commutation positionnée de manière fixe et une pièce de commutation mobile agencée en vis-à-vis ,
**caractérisé en ce que** l'accouplement entre le module de base (1) et le bloc modulaire de commutateurs auxiliaires (9) est réalisé de telle sorte que, indépendamment du bloc modulaire de commutateurs auxiliaires (9) utilisé, en cas de déclenchement, différents chemins peuvent être transmis dans le système de contact du bloc modulaire de commutateurs auxiliaires (9) au moyen d'un élément élastique, l'élément élastique (25), en position fermée, agissant avec une force F2 vers le bas en direction du module de base (1), dans le bloc de commutateurs auxiliaires étant déposé un chemin S2 qui, dans le module de base (1), mène à une transmission de chemin S1, une différence X se présentant, étant donné que S1 est supérieure à S2, laquelle est compensée par l'élément élastique (25).

2. Appareil de commutation selon la revendication 1, **caractérisé en ce que** l'élément élastique est un ressort de compression.

3. Appareil de commutation selon la revendication 1 ou 2, **caractérisé en ce qu'**est intégrée, sur le bloc de commutateurs auxiliaires (9), une connexion de bobine (18) qui est positionnée en amont des trajets de courant principaux.

4. Appareil de commutation selon l'une des revendications 1 à 3, **caractérisé en ce que** le bloc de commutateurs auxiliaires (9) est réalisé en tant que module auxiliaire standard ou module auxiliaire de communication ou module auxiliaire de contacteur de condensateur.

5. Appareil de commutation selon l'une des revendications 1 à 4, **caractérisé en ce que** le bloc de commutateurs auxiliaires (9) est réalisé selon une connectique de connexion vissée ou au moyen d'une connectique de bornes à ressort ou au moyen d'une connectique de raccordement avec cosse de câble à oeillet.

6. Appareil de commutation selon l'une des revendications 1 à 5, **caractérisé en ce que** le concept de base de l'appareil de commutation composé d'un module de base (1) et d'un bloc modulaire de commutateurs auxiliaires (9) peut être réalisé avec des modules de base (1) de différente taille respectivement avec des blocs modulaires de commutateurs auxiliaires (9) ayant une fonction différente.

7. Appareil de commutation selon l'une des revendications 1 à 6, **caractérisé en ce que** l'amortissement doit être monté ultérieurement directement sur la connexion de bobine (18).

8. Appareil de commutation selon l'une des revendications 1 à 7, **caractérisé en ce qu'**un canal de câble (17) est agencé entre la connexion de bobine (18) et les contacts auxiliaires.

9. Appareil de commutation selon l'une des revendications 1 à 8, **caractérisé en ce que** le bloc modulaire de commutateurs auxiliaires (9) doit être équipé de contacts auxiliaires d'ouverture et/ou de fermeture.

10. Appareil de commutation selon l'une des revendications 1 à 9, **caractérisé en ce que** l'appareil de commutation est un contacteur.
